# EUROPÄISCHE PATENTSCHRIFT

(11) **EP 0 578 078 B1**
(45) Veröffentlichungstag und Bekanntmachung des Hinweises auf die Patenterteilung: **19.09.2001**
(21) Anmeldenummer: 93110178.6
(22) Anmeldetag: 25.06.1993
(51) Int. Cl.: G11B 15/467, G11B 20/14, H03M 5/14

(54) **Verfahren zur Spurfolgesteuerung in einem Recorder**
Track following method in a recorder
Procédé pour le suivi de piste dans un enregistreur

(30) Priorität: 04.07.1992 DE 4222030
(43) Veröffentlichungstag der Anmeldung: 12.01.1994
(73) Patentinhaber: Deutsche Thomson-Brandt GmbH, 78003 Villingen-Schwenningen (DE)
(72) Erfinder: Kaaden, Jürgen, D-7730 VS-Villingen (DE); Stumpf, Christof, F-38240 Meylan (FR); Wursthorn, Edgar, D-7737 Bad Dürrheim (DE)

(56) Entgegenhaltungen:
- EP-A- 0 339 724
- EP-A- 0 472 375
- EP-A- 0 476 766
- EP-A- 0 476 767
- EP-A- 0 492 704
- PATENT ABSTRACTS OF JAPAN vol. 13, no. 537 (P-968)30. November 1989 & JP-A-01 220 213 (MATSUSHITA ELECTRIC IND., CO., LTD.) 1. September 1989
- IEEE TRANSACTIONS ON CONSUMER ELECTRONICS Bd. 34, Nr. 3 , August 1988 , NEW YORK US Seiten 597 - 605 BORGERS ET AL. 'AN EXPERIMENTAL DIGITAL VCR WITH 40MM DRUM, SINGLE ACTUATOR AND DCT-BASED BIT-RATE REDUCTION'

## Beschreibung

Die Erfindung geht aus von einem Verfahren gemäß dem Oberbegriff des Anspruchs 1.

Bei der Aufzeichnung in Schrägspuren, insbesondere bei analogen und digitalen Bandaufzeichnungsgeräten für Bild und/oder Ton, ist es erforderlich, daß bei der Wiedergabe jeder der im allgemeinen zwei Köpfe genau seine Spur findet. Zu diesem Zweck wird bei VHS auf einer Längsspur des Magnetbandes ein Impuls aufgezeichnet, wenn ein bestimmter Kopf in das Band eintaucht. Bei der Wiedergabe wird der Impuls ausgewertet und dient zur Steuerung der Band/Kopfservoregelung. Bedingt durch den Einfluß von Banddehnungen und Einstelltoleranzen ist in derartigen Geräten eine Verstellmöglichkeit der Impulsposition durch den Benutzer, das sogenannte Tracking, vorgesehen.

Das 8 mm Videosystem beinhaltet ein sogenanntes ATF (automatic track following), bei dem die Spurhalteinformation in den Nutzkanal eingebracht wird. Dabei wird bei Aufnahme eine vorbestimmte Folge von bestimmten niederfrequenten Signalen, und zwar jeweils eines pro Spur, in eine Frequenzlücke des Nutzsignalspektrums eingeschachtelt. Bei Wiedergabe liest der Kopf seine Nutzinformation aus der Spur, aber auch, bedingt durch die geringe Azimutentkopplung bei niederfrequenten Signalen, die Spurhalteinformation der beiden Nachbarspuren. Durch Amplitudenvergleich der Signale der rechten und linken Nachbarspur wird die Spurhaltung geregelt.

Bei dem DAT-System (Digital Audio Tape) für die digitale Aufzeichnung von Audiosignalen werden das Nutzsignal und die Spurhaltesignale räumlich getrennt aufgezeichnet, wobei dem Nutzsignal ein sogenannter "run-in" Bereich zur Synchronisation der Taktrückgewinnung vorangestellt ist und die ATF-Frequenzen bei Aufzeichnung durch Teilung aus dem Signaltakt gewonnen werden.

Bei der digitalen Videoaufzeichnung, insbesondere für HDTV, ist die aufzuzeichnende Datenrate hoch und eine räumlich getrennte Aufzeichnung von Signalen auf dem Band kaum vertretbar, da dann die benötigte Bandfläche unerträglich hoch wird.

Es ist auch eine spezielle Generierung der ATF Signale bekannt (IEEE Transactions on Consumer Electronics August 88, Seite 597 - 605), bei der der "run-in" Bereich der Taktrückgewinnung zugeordnet wird und die ATF-Information durch eine zyklische Variation des Gleichanteiles der Kanaldaten gebildet wird. Die Variation der digitalen Summe im Zyklus von jeweils 10 Bit erlaubt die Generierung von Dreiecksignalen mit verschiedenen Grundfrequenzen jeweils unterschiedlicher Amplitude als permanente Zusatzfunktion zur 8/10-Kanalmodulation (Anpassung der Eingangssignale an die Möglichkeiten des Aufzeichnungskanales).

Diese bekannten Lösungen haben in mehr oder weniger starkem Ausmaß folgende Nachteile:

Es können im allgemeinen nur dreieckförmige Signale erzeugt werden, was einen großen Oberwellengehalt und einen entsprechend hohen Klirrfaktor bedeutet. Verschiedene Frequenzen haben im allgemeinen schon bei der Generierung in unerwünschter Weise unterschiedliche Amplituden. Wenn ein permanentes ATF Signal zusätzlich erzeugt wird, ist ein Abwägen von Prioritäten notwendig, wenn zwei widersprüchliche Forderungen zu erfüllen sind. Dadurch können Fehler in der ATF-Folge auftreten, weil die Fehlerrate des Nutzsignals z. B. durch Lauflängenüberschreitungen und damit verbundene Fehlsynchronisierungen nicht steigen soll. Die Möglichkeiten zur Kanalanpassung sind im allgemeinen deutlich eingeschränkt. Ohne Einbeziehung von ATF werden in der 8/10-Modulation aus 1024 möglichen Ausgangskombinationen (10 Bit) nur 256 (8 Bit) ausgewählt. Diese 256 Bit sind hinsichtlich ihrer Disparität (Summe aller H Bits - Summe aller L Bits) auf 0 ausgesucht, was nicht immer möglich ist, und bezüglich ihrer Lauflänge optimiert, damit tiefe und hohe Frequenzanteile abgesenkt werden. Nicht benutzte Kombinationen (Codeworte) 1024 - 256 können ignoriert werden. Ihr Auftreten bei der Wiedergabe ist eine Indikation für einen aufgetretenen Fehler. Dieses sogenannte "erasure" kann vorteilhaft zur Fehlerkorrektur verwendet werden. Unter Einbeziehung von ATF wird der Codewortbereich deutlich größer, und besonders vorteilhafte Codeworte (Disparität = 0) können selten benutzt werden. Der zusätzliche Schaltungsaufwand ist im allgemeinen beträchtlich, da der digitale Summenwert von zwei variablen Quellen gesteuert wird. Die Grundwandlung 8/10 ergäbe ein optimiertes Datenwort, das jeweils noch auf seine Eignung als ATF Codewort getestet werden muß (Prüfung der Disparität und gegebenenfalls Suchen eines neuen Codewortes).

Ein Verfahren zur Spurfolgesteuerung in einem Recorder nach dem Oberbegriff des Anspruchs 1 ist aus der EP-A-0 492 704 bekannt. Aus der EP-A-0 339 724 ist ein weiteres Verfahren dieser Art bekannt, das Pilotsignale mit Codewörtern mit einer spezifischen Disparität verwendet zur Spurfolgesteuerung.

Der Erfindung liegt die Aufgabe zugrunde, ein Verfahren zur Spurfolgesteuerung in einem Rekorder zu schaffen, das keine Aufzeichnung verschiedener ATF-Frequenzen erfordert und die Erzeugung eines ATF Signals mit geringeren Oberwellen und geringen Klirrfaktor ermöglicht. Diese Aufgabe wird durch die im Anspruch 1 angegebene Erfindung gelöst. Vorteilhafte Weiterbildung der Erfindung sind in den Unteransprüchen angegeben.

Bei der Erfindung wird also die kontinuierliche ATF Erzeugung in einer Schrägspur ersetzt durch eine oder mehrere kurzzeitig auftretende ATF-Burst-Frequenzen in Nutzdatenlücken wie run-in, run-out und edit gaps innerhalb der Spur. Die ATF Frequenzburste sind innerhalb einer Spur mit konstanter Frequenz aufgezeichnet. Die Erzeugung der ATF-Burste erfolgt mit dem Takt der Kanalmodulation, so daß eine Taktrücksynchronisation während der ATF-Phase bei der Wiedergabe leicht möglich ist. Zur weiteren Verbesserung der Taktrückgewinnung sind die ATF-Wörter so geschaffen, daß innerhalb eines Wortes mindestens zwei Flanken auftreten. Dies erfolgt auch unter dem Gesichtspunkt, daß zu Synchronisierzwecken des Gesamtsystems ein Blocksynchronisierimpuls vorgesehen ist, der sonst im System nicht verwendet wird. Die Unterscheidung erfolgt fast immer durch eine besondere Lauflänge (runlength) dieses Synchronisierimpulses, der im vorliegenden Fall den Wert 7 aufweist. Kein erzeugtes Signal darf daher diesen Wert erreichen, so daß eine maximale Länge von 6 aufeinanderfolgenden H- oder L-Bits die Systemgrenze darstellt. Für Systeme mit anderen Randbedingungen können die Werte verändert sein.

Die ATF-Burste stellen sinusförmig angenäherte oder andersförmige Schwingungszüge dar, von denen verschiedene Frequenzen in Nachbarspuren vorhanden sind. Hierzu werden Datenworte mit unterschiedlichen digitalen Summen aneinandergereiht. Es existiert somit eine höchste Frequenz von Takt/40, bei der 4 Schritte ein Dreieck mit kleiner Amplitude beschreiben, wobei mit zunehmender Länge der Sequenz die Auflösung besser wird. Eine optimale Anpassung an Einschwingverhalten der Auswertschaltung, Azimutdämpfung der Köpfe und tieffrequente Eigenschaften des Bandaufzeichnungskanales läßt jedoch nur einen nutzbaren Frequenzbereich von ca. 200 kHz - 2 MHz zu.

Die Erfindung wird im folgenden anhand der Zeichnung näher erläutert. Darin zeigen
- Fig. 1: ein Blockschaltbild zur Realisierung des erfindungsgemäßen Verfahrens,
- Fig. 2: Kurven zur Erläuterung des Blockschaltbildes gemäß Fig. 1,
- Fig. 3: weitere Kurven zur Erläuterung der Wirkungsweise,
- Fig. 4: den Verlauf der digitalen Summe bei einem Dreiecksignalund einem sinusförmig angenäherten Signal,
- Fig. 5, 6: Weiterbildungen der Figur 4 für eine andere ATF-Frequenz,
- Fig. 7: die Signalform der Summenvariationssignale,
- Fig. 8: eine Realisierungsmöglichkeit für den Block "ATF-Selektion",
- Fig. 9: exemplarisch die Folge von Codeworten,
- Fig. 10: ein sinusoptimiertes ATF-Signal und
- Fig. 11: eine Schaltung zur Realisierung der Regelschleife.

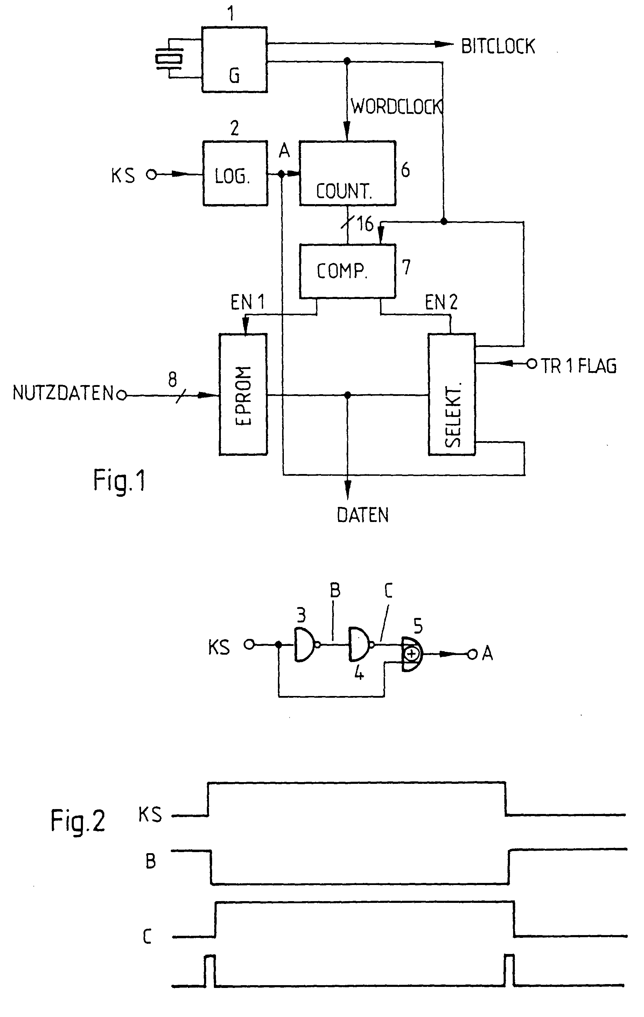

Figur 1 zeigt ein Blockschaltbild für ein System, das nach dem erfindungsgemäßen Verfahren arbeitet. In dem Oszillator 1 wird ein 50 MHz Signal erzeugt, das den Bitclock darstellt. Zusätzlich wird ein durch 10 geteilter Takt als sogenannter Wordclock bereitgestellt. Ein externes, vom Kopftrommelservosystem kommendes Kopfschaltsignal KS markiert mit seinem Flankenwechsel jeweils den Eintauchzeitpunkt eines Schreib/Lesekopfes in das Band und damit den Anfang einer Spur. KS wird der Funktionsgruppe Logik 2 zugeführt, die in Fig. 1 unten durch die Bauteile 3, 4, 5 näher dargestellt ist. Das Ausgangssignal A ist das Rücksetzsignal RES für den Zähler 6 mit 16 Bit Breite, d. h. 64000 möglichen Zählzuständen, der mit jeder positiven Flanke des Wordclock inkrementiert.

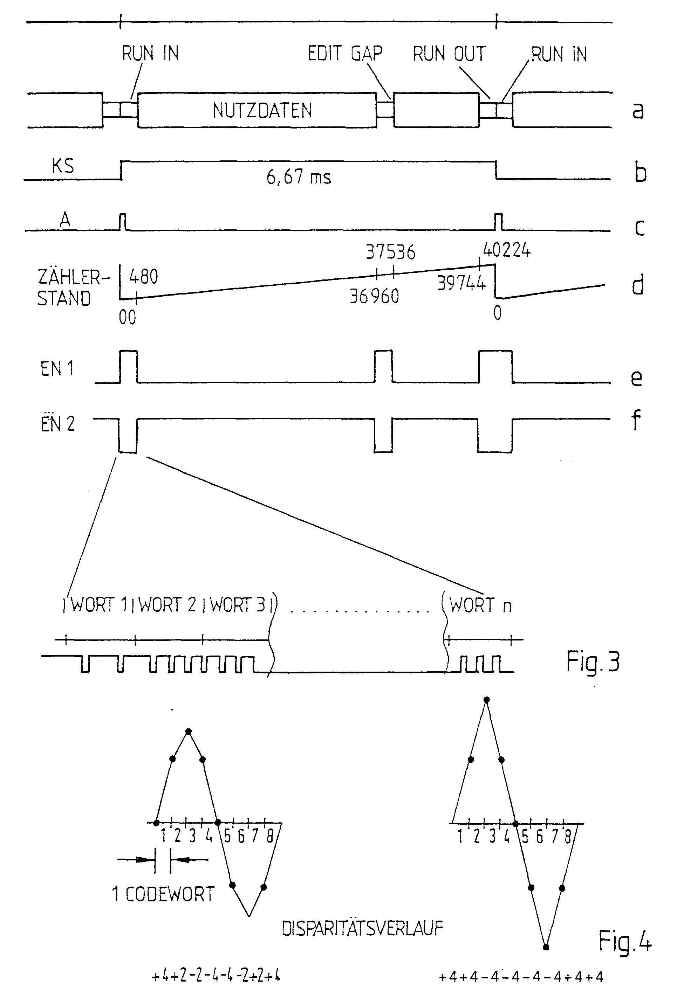

Der Zählerstand, der in Fig. 3d dargestellt ist, wird in dem 16 Bit-Vergleicher 7 mit verschiedenen Festwerten verglichen, und bei Gleichheit werden Schaltsignale generiert, die in Figur 3 als EN1 und EN2 dargestellt sind. EN1 steuert den enable-Eingang des PROM (programmable read only memory), das die 8 Bit breiten Nutzdaten in 10 Bit breite Kanaldaten wandelt. EN2 ist das enable-Signal für die Funktionsgruppe ATF Selektion, die die Variation der digitalen Summenworte abhängig von der Spur durchführt.

Das Beispiel von Fig. 4 stellt für eine Frequenz von Takt/80 = 8 x 10 Bitworte die Verläufe der digitalen Summen bei einem Dreiecksignal (äquidistante Summenänderung) und einem sinusförmig angenäherten Signal dar.

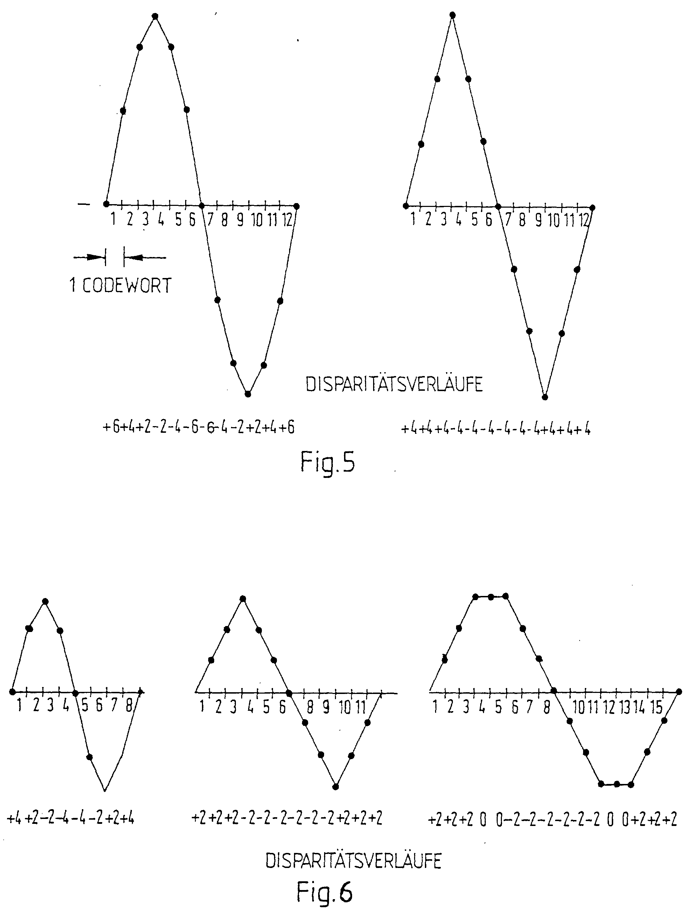

Fig. 5 zeigt ein Beispiel für Takt/120, das deutlich höhere Amptitudenwerte aufweist.

Fig. 6 zeigt konstante Amptitudenverhältnisse verschiedener Frequenzen bei unterschiedlichem Oberwellengehalt der einzelnen Signale.

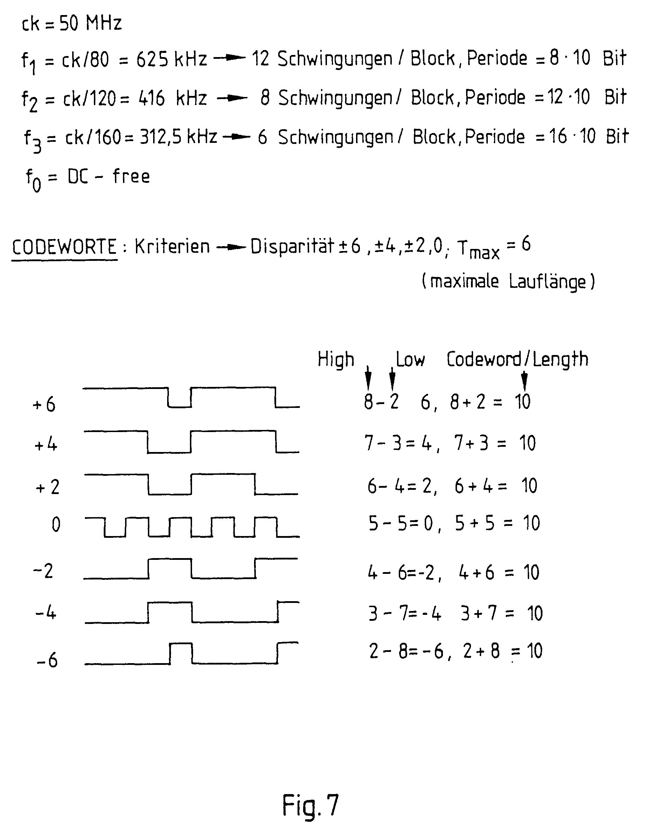

In Fig. 7 ist die Signalform der Summenvariationssignale dargestellt. Das Beispiel zeigt eine 8/10-Modulation mit Taktsequenz von 50 MHz, einer Lauflängenbegrenzung von 6 und drei ATF-Frequenzen.

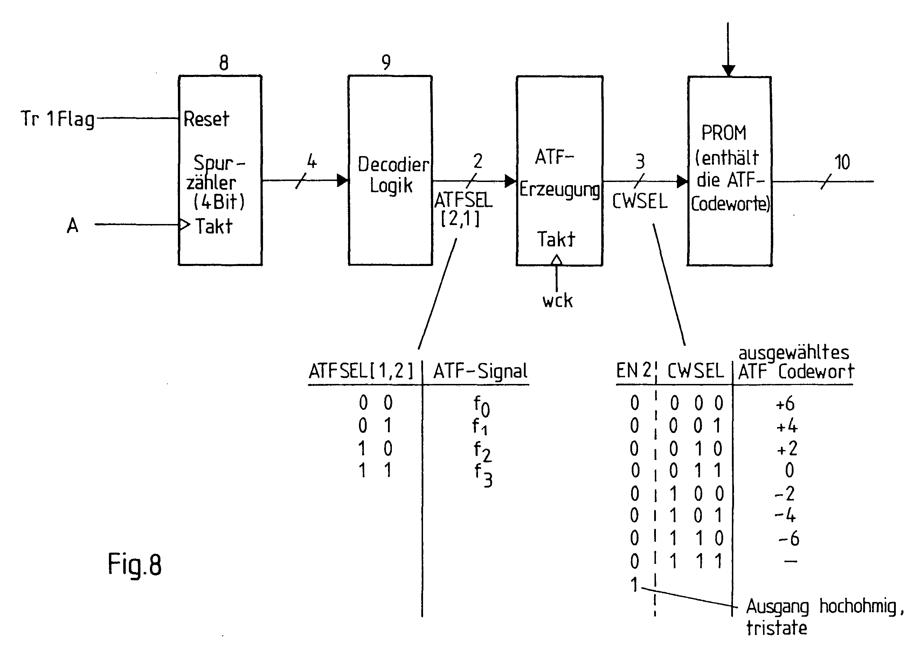

Fig. 8 zeigt eine Realisierungsmöglichkeit für den Block "ATF-Selektion". Mit Hilfe des Spurlängenzählers 8 (Inkrementierung einmal pro Spur mittels A, Rücksetzen des Zählers bei der ersten Spur eines Vollbildes mittels TR1Flag) lassen sich die verschiedenen Spuren eines Vollbildes kennzeichnen. Eine Dekodierlogik 9 ordnet jeder Spur die zugehörige ATF- Frequenz zu. Die ATF-Erzeugung generiert für jede ATF-Frequenz eine Folge von Adressen, die ihrerseits aus einem PROM die zugehörigen ATF-Codeworte auswählt.

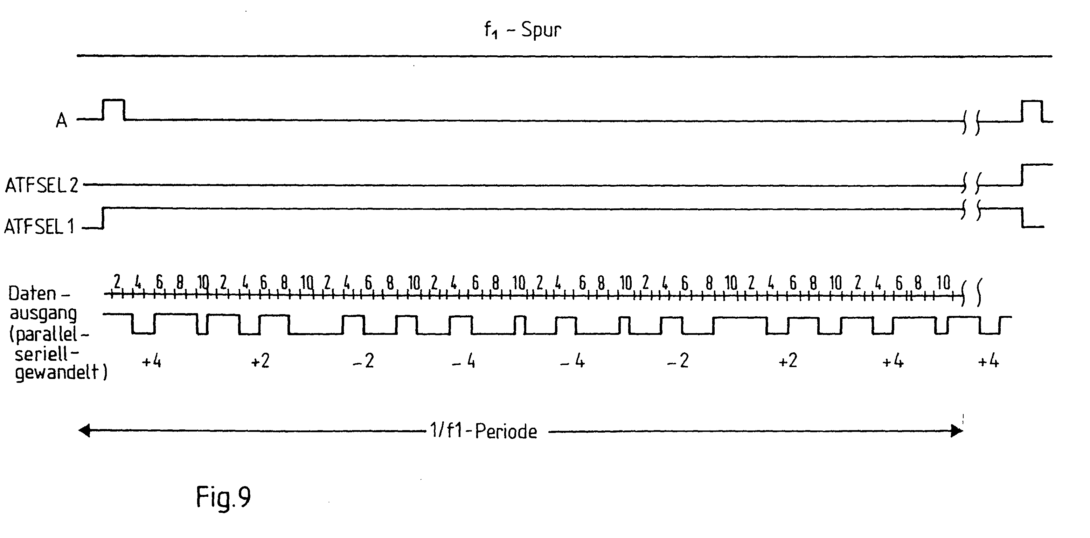

Fig. 9 zeigt exemplarisch die Folge von Codeworten, die ausgewählt werden, um die ATF-Frequenz fl = ck/80 zu generieren. Die ATF-Erzeugung kann wahlweise mit einem PROM und den entsprechenden Zustandsspeichern oder mit programmierbaren Logikbausteinen (PLD's) realisiert werden. Dabei wird in Abhängigkeit von ATFSEL (1, 2) eine bestimmte Folge von Zuständen durchlaufen, wobei in jedem Zustand eine bestimmte Adresse ausgegeben wird, die wiederum das entsprechende ATF-Codewort auswählt, siehe auch Figuren 7, 4, 5.

Die Erzeugung eines sinusoptimierten-ATF Signals kann zusätzlich durch Vergleich auf Bitebene erfolgen.

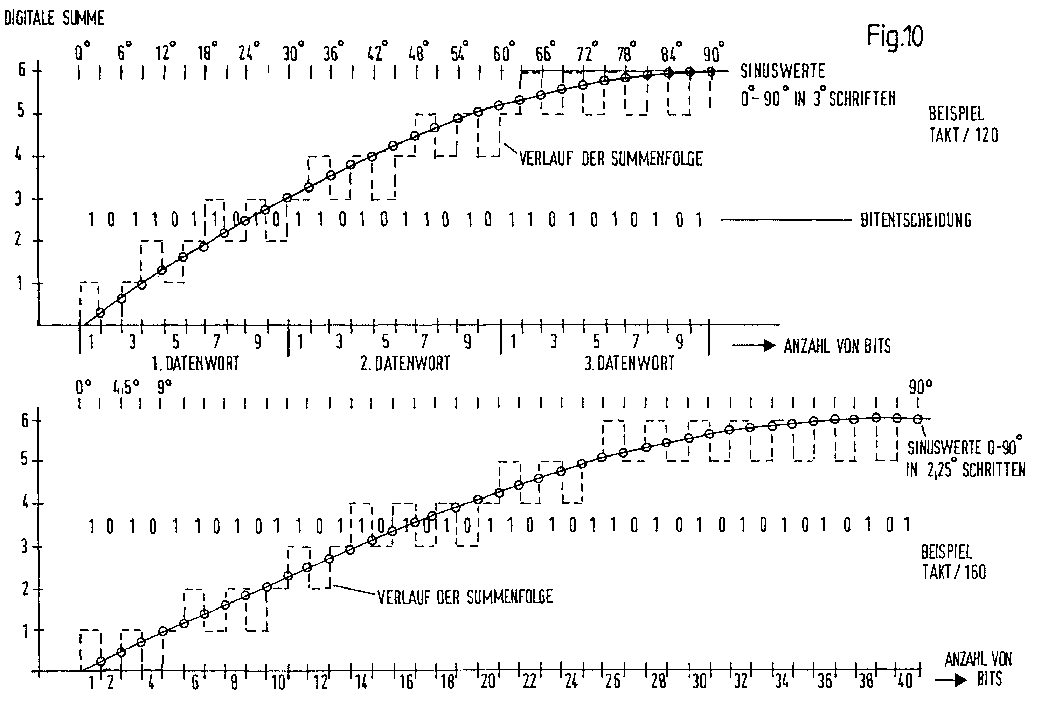

In Fig. 10 ist eine solche Optimierung vorgenommen. Zu jedem Sinuswert im Abstand von jeweils 3°, z. B. aus einer Tabelle entnommen, ist ein digitaler Summenwert gebildet, der den Sinuswert mit Einheitssprüngen der Größe +/- 1 möglichst gut annähert. Die Darstellung ist auf dem Bereich 0 - 90° beschränkt und stellt die Näherung für zwei Pilottöne (Takt/120 und Takt/160) dar. Die Maximalamplitude ist auf +/- 6 begrenzt, kann jedoch je nach erlaubter Lauflänge deutlich erhöht werden. Obwohl die Annäherung grob ist, stellen sich dennoch sehr gute Klirrfaktorwerte für das erzeugte Sinussignal ein. Die Darstellung war zunächst für eine 10 Bit Rasterung vorgesehen und stellt dabei eine einfache Dimensionierungsmöglichkeit für die Tabellenwerte dar. Bei der Realisierung hat es sich als vorteilhaft erwiesen, eine Vergleichsoperation im Bit-Bereich durchzuführen.

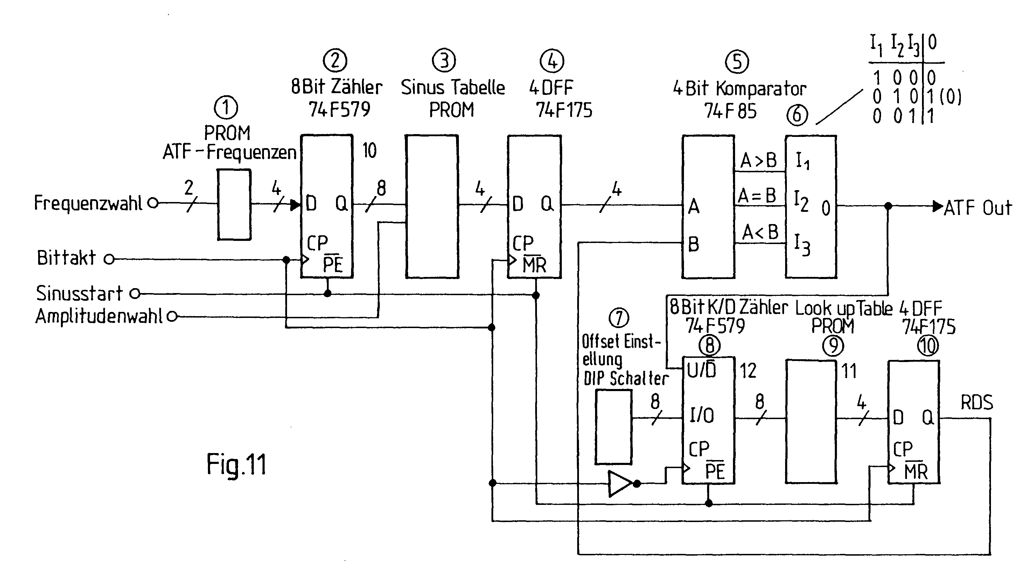

Da dieses Verfahren in einer Regelschleife durchlaufen werden kann, ist es für die Implementierung auf Chip-Ebene als äußerst wichtig einzustufen. In Fig. 11 ist eine Schaltung für eine solche Regelschleife angegeben. In Fig. 11 bedeuten

PROM-ATF-Frequenzen: Mit Hilfe des Signals "Frequenzwahl" Auswählen des für die jeweilige ATF-Frequenz notwendigen Zählerwertes für den Zähler 10.

PROM-Sinustabelle: Enthält die 4 Bit-Sinuswerte in Zweier- komplementdarstellung.

Der Baustein 9 enthält eine PROM-look-Up Table: Es erfolgt die Umrechnung des die laufende digitale Summe (RDS) charakterisierenden Zählerstandes des Zählers 12 in einen offset-freien Wert in Zweierkomplementdarstellung.

Die Erzeugung von ATF-Signalen ist nicht auf eine 8/10-Modulation beschränkt, sondern kann auch auf beliebige Blockcodes angewendet werden. Weiterhin kann die Sinusannäherung vorteilhaft auch mit Codeworten ungeradzahliger Summen aufgebaut werden, wobei sich hierbei die Blockgrenzen verwischen und der Sinus über eine Sequenz von z. B. 120 Bit erzeugt wird, und eine gleichgroße Anzahl von Codeworten existiert, die länger oder kürzer sind als der Durchschnitt aller Codeworte. Hierzu muß dann das Schema der Blockcodes (z. B. 10 Bit breite Ausgangsworte) verlassen werden, was die Implementierung erschweren könnte.

## Patentansprüche

1. Verfahren zur Spurfolgesteuerung in einem Recorder mit Aufzeichnung von digitalen Nutzdatenfolgen in rasenlosen Schrägspuren eines Magnetbands, wobei in den jeweiligen Nutzdatenfolgen einer Schrägspur Datenlücken vorgesehen sind, deren Zeitbereich zur Gewinnung von ATF-Signalen mit einer vorbestimmten Folge von Codewörtern mit zyklischen Änderungen der digitalen Summe gefüllt wird, indem eine Anzahl von Zyklen einen symmetrischen Schwingungszug bildet und die Änderung der digitalen Summe synchron mit dem Takt gesteuert wird, mit dem auch die Nutzdaten getaktet werden, wobei die zyklischen Änderungen der digitalen Summe derart gewählt sind, daß die Frequenz der darauf beruhenden symmetrischen Schwingungszüge innerhalb einer Schrägspur konstant und von Schrägspur zu Schrägspur unterschiedlich ist, **dadurch gekennzeichnet, daß** die laufende digitale Summe innerhalb der codework abschnittswerse einen sinus/cosinus formigen Verlauf aufweist, indem Codeworte verwendet werden, in denen eine bitweise Annäherung der Summenfolge an entsprechende Sinus/Cosinuswerte mittels Einheitssprüngen der Größe ± 1 durch bitweisen Vergleich mit Sinus/Cosinuswerten erzielt wird.

2. Verfahren nach Anspruch 1, **dadurch gekennzeichnet, daß** die Datenlücken durch Runin-, Runout- und/oder Editgaps gebildet werden.

3. Verfahren nach Anspruch 1, **dadurch gekennzeichnet, daß** die Modulation der Nutzdaten jeweils während der Datenlücke durch eine Auswahl aus einer Menge bestimmter Datenworte gebildet wird.

4. Verfahren nach Anspruch 1, **dadurch gekennzeichnet, daß** die während der Datenlücken aufgefüllte digitale Summenvariation während bestimmter Zeitabschnitte wie für Blocksynchronisiersignale oder Zählinformationen unterbrochen wird.

5. Verfahren nach Anspruch 4, **dadurch gekennzeichnet, daß** während der Unterbrechungszeit die Phase des Schwingungszuges ohne Änderung aufrechterhalten bleibt.

6. Verfahren nach Anspruch 1, **dadurch gekennzeichnet, daß** die Änderung der digitalen Summe definierte Begrenzungen der Lauflänge oder Runlenght einhält, wobei die Lauflänge oder Runlength des Summenwortes stets wenigstens eine Ordnung kleiner ist als die des Blocksynchronisiersignals.

7. Verfahren nach Anspruch 1, **dadurch gekennzeichnet, daß** die Codeworte für die Spurfolgesteuerung so gewählt sind, daß auch bei beliebiger Aneinanderreihung gültiger Worte die Begrenzung der Lauflänge eingehalten wird.

8. Verfahren nach Anspruch 1, **dadurch gekennzeichnet, daß** die Datenwörter für die Bildung der digitalen Summe jeweils wenigstens zwei Flanken beinhalten.

9. Verfahren nach Anspruch 1, **dadurch gekennzeichnet, daß** die Schrittgröße, d. h. die Differenz in der Anzahl von H Bits und L Bits innerhalb eines definierten Zeitraums, so geändert wird, daß ein sinusförmiger Verlauf des Schwingungszuges erreicht wird.

10. Verfahren nach Anspruch 1, **dadurch gekennzeichnet, daß** die Schrittgröße so geändert wird, daß alle erzeugten Schwingungszüge unterschiedlicher Dauer gleiche Amplitude aufweisen.

11. Verfahren nach Anspruch 1, **dadurch gekennzeichnet, daß** die Längen der Codewörter innerhalb eines Schwingungszuges unterschiedlich sind.

12. Verfahren nach Anspruch 11, **dadurch gekennzeichnet, daß** die Abweichung in der Länge der Codewörter innerhalb eines Schwingungszuges in negativer Richtung und in positiver Richtung gleich groß ist.

## Claims

1. Method for the control of track following in a recorder using recording of digital useful data sequences in oblique tracks of a magnetic tape without inactive areas between the tracks, wherein data gaps occur in the useful data sequences of an oblique track the time period containing the data gaps being filled with a predetermined sequence of code words with cyclical modifications of the digital sum for obtraining ATF-signals wherein a number of cycles forms a symmetrical train of oscillations and the modification of the digital sum is controlled in synchronism with the clock rate with which the items of useful data are also clocked wherein the cyclical modifications of the digital sum are chosen in such a way that the frequency of symmetrical trains of oscillations basing thereupon is constant within one oblique track and is different from one oblique track to the other oblique track,
**characterized in that**
the running digital sum within the code words exhibits a sinus/cosinus ― from alternatingly from section to section by using code words in which an approximation from bit to bit of the sum sequence to corresponding
sinus/cosinus-values is achieved by means to unit steps of magnitude ±1 by a comparison with sinus/cosinus values from bit to bit.

2. Method in accordance with claim 1, **characterised in that**, the data gaps are formed by run-in, run-out and/or edit gaps.

3. Method in accordance with claim 1, **characterised in that**, the modulation of the useful data during each of the data gaps is formed by a selection from a plurality of particular data words.

4. Method in accordance with claim 1, **characterised in that**, the variation of the digital sum filled up during the data gaps is interrupted during certain time periods such as for block synchronisation signals or items of counting information.

5. Method in accordance with claim 4, **characterised in that**, the phase of the train of oscillations is maintained unchanged during the period of interruption.

6. Method in accordance with claim 1, **characterised in that**, the change of the digital sum adheres to defined limits of the run length wherein the run length of the sum word is always at least one order of magnitude smaller than that of the block synchronisation signal.

7. Method in accordance with claim 1, **characterised in that**, the code words for the control of track following are selected such that the limit of the run length is adhered to even for arbitrary sequences of valid words.

8. Method in accordance with claim 1, **characterised in that**, the data words for the formation of the digital sum each comprise at least two flanks.

9. Method in accordance with claim 1, **characterised in that**, the step size i.e. the difference in the number of H bits and L bits within a defined time period is so modified that a sinusoidal waveform of the train of oscillations is obtained.

10. Method in accordance with claim 1, **characterised in that**, the step size is so modified that all of the trains of oscillations of different duration which are produced have the same amplitude.

11. Method in accordance with claim 1, **characterised in that**, the lengths of the code words within a train of oscillations are different.

12. Method in accordance with claim 11, **characterised in that**, the deviation in the length of the code words within a train of oscillations is equally great in the negative and in the positive direction.

## Revendications

1. Procédé pour le suivi de piste dans un enregistreur, avec enregistrement de séquences de données utiles numériques sur les pistes inclinées sans vitesse d'une bande magnétique, où des intervalles de données, dont la plage de temps est remplie pour l'acquisition des signaux ATF avec une séquence prédéfinie de mots code avec des modifications cycliques de la somme numérique, sont prévus dans les séquences de données utiles respectives d'une piste inclinée, dans lequel un nombre de cycles constitue un train d'oscillations symétrique et dans lequel la modification de la somme numérique est commandée en synchronisation avec l'impulsion à laquelle les données utiles sont également synchronisées, où les modifications cycliques de la somme numérique sont sélectionnées de sorte que la fréquence des trains d'oscillations symétriques sur lesquels elle repose est constante sur une piste inclinée et diffère d'une piste inclinée à une autre, **caractérisé en ce que** la somme numérique en cours présente par sections une courbe sinusoïdale/cosinusoïdale dans les mots code, dans lequel des mots code sont utilisés, où un rapprochement en bits de la séquence de sommes par rapport aux valeurs sinusoïdales/cosinusoïdales correspondantes sont atteintes avec des échelons unité de la grandeur +/- 1 par comparaison binaire avec les valeurs sinusoïdales/cosinusoïdales.

2. Procédé conforme à la revendication 1, **caractérisé en ce que** les intervalles de données sont constitués par des intervalles run-in (entrée), run-out (sortie) et/ou edit (édition).

3. Procédé conforme à la revendication 1, **caractérisé en ce que** la modulation des données utiles est constituée, pendant les intervalles de données, par une sélection à partir d'une quantité de mots définis contenant des données.

4. Procédé conforme à la revendication 1, **caractérisé en ce que** la variation numérique de la somme, complétée pendant les intervalles de données, est interrompue pendant certaines périodes, de la même manière que pour les signaux de synchronisation des blocs ou les informations de comptage.

5. Procédé conforme à la revendication 4, **caractérisé en ce que** la phase de train d'oscillations reste maintenue pendant le temps de l'interruption.

6. Procédé conforme à la revendication 1, **caractérisé en ce que** la modification de la somme numérique contient des limites de durée (ou runlength), où la durée ou runlength du mot de somme est inférieure à la durée du signal de synchronisation des blocs.

7. Procédé conforme à la revendication 1, **caractérisé en ce que** les mots code pour le suivi de piste sont sélectionnés de sorte que la limite de la durée soit respectée lors de l'alignement souhaité des mots valides.

8. Procédé conforme à la revendication 1, **caractérisé en ce que** les mots de données contiennent respectivement au moins deux flancs pour la constitution de la somme numérique.

9. Procédé conforme à la revendication 1, **caractérisé en ce que** la taille des intervalles, c'est-à-dire la différence entre le nombre de bits H et de bits L dans une période définie est modifiée de sorte qu'une courbe sinusoïdale de train d'oscillations soit atteinte.

10. Procédé conforme à la revendication 1, **caractérisé en ce que** la taille des intervalles est modifiée de sorte que tous les trains d'oscillations créés de différente durée présentent la même amplitude.

11. Procédé conforme à la revendication 1, **caractérisé en ce que** les longueurs des mots code sont différentes au sein d'un train d'oscillations.

12. Procédé conforme à la revendication 11, **caractérisé en ce que** l'écart de durée des mots code au sein d'une traction d'oscillations est de taille équivalente dans le sens négatif et dans le sens positif.
